(19) Europäisches Patentamt / European Patent Office / Office européen des brevets

(11) **EP 4 418 795 B1**

(12) **EUROPEAN PATENT SPECIFICATION**

(45) Date of publication and mention
of the grant of the patent:
**18.02.2026 Bulletin 2026/08**

(21) Application number: **22880425.8**

(22) Date of filing: **14.10.2022**

(51) International Patent Classification (IPC):
$H04W\ 74/00^{(2009.01)}$    $H04L\ 5/00^{(2006.01)}$
$H04L\ 5/14^{(2006.01)}$    $H04W\ 74/04^{(2009.01)}$
$H04W\ 74/08^{(2024.01)}$    $H04W\ 74/0833^{(2024.01)}$

(52) Cooperative Patent Classification (CPC):
H04W 74/00; H04L 5/0053; H04L 5/1469;
H04W 74/006; H04W 74/04; H04W 74/08;
H04W 74/0833; H04W 74/0891

(86) International application number:
**PCT/CN2022/125407**

(87) International publication number:
**WO 2023/061489 (20.04.2023 Gazette 2023/16)**

(54) **RANDOM ACCESS PROCESSING METHOD AND APPARATUS, AND TERMINAL AND NETWORK-SIDE DEVICE**

DIREKTZUGRIFFSVERARBEITUNGSVERFAHREN UND -VORRICHTUNG SOWIE ENDGERÄT UND NETZWERKSEITIGE VORRICHTUNG

PROCÉDÉ ET APPAREIL DE TRAITEMENT D'ACCÈS ALÉATOIRE, TERMINAL ET DISPOSITIF CÔTÉ RÉSEAU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.10.2021 CN 202111205703**

(43) Date of publication of application:
**21.08.2024 Bulletin 2024/34**

(73) Proprietor: **Vivo Mobile Communication Co., Ltd. Dongguan, Guangdong 523863 (CN)**

(72) Inventors:
• **GU, Yi**
  **Dongguan, Guangdong 523863 (CN)**
• **WU, Kai**
  **Dongguan, Guangdong 523863 (CN)**
• **WANG, Lihui**
  **Dongguan, Guangdong 523863 (CN)**
• **YANG, Kun**
  **Dongguan, Guangdong 523863 (CN)**
• **MO, Yitao**
  **Dongguan, Guangdong 523863 (CN)**
• **BAO, Wei**
  **Dongguan, Guangdong 523863 (CN)**

(74) Representative: **Shieldmark**
**P.O. Box 90471**
**2509 LL The Hague (NL)**

(56) References cited:
EP-A1- 3 793 310    EP-A1- 3 793 310
WO-A1-2020/032742    CN-A- 108 521 889
US-A1- 2019 254 071    US-A1- 2019 254 071
US-A1- 2020 178 310    US-A1- 2021 076 384

• **NOKIA, NOKIA SHANGHAI BELL: "Remaining details on PRACH procedure", 3GPP DRAFT; R1-1716138_REMAINING DETAILS ON RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Nagoya, Japan; 20170918 - 20170921, 17 September 2017 (2017-09-17), Mobile Competence Centre ; 650, route des Lucioles ; F-06921 Sophia-Antipolis Cedex ; France , XP051339596**

**EP 4 418 795 B1**

**Description**

**CROSS-REFERENCE TO RELATED APPLICATIONS**

This application claims priority to Chinese Patent Application No. 202111205703.4 filed on October 15, 2021.

**TECHNICAL FIELD**

This application belongs to the technical field of communication, and more particularly relates to a random access processing method and apparatus, a terminal, and a network-side device.

**BACKGROUND**

In a communication system, after searching a cell, a terminal may establish a connection with the cell via a 2-step or 4-step random access process to realize communication. When the terminal is at an edge of the cell, transmission performances of the terminal are obviously limited, and performances of a random access channel are affected to some extent. Especially in a frequency range 2 (Frequency range 2, FR2) band, almost all uplink channels cannot achieve target transmission performances, and the terminal may not access a network. Therefore, the existing technology has the problem of low reliability of random access.

US2021/076384A1 discloses base stations and user equipments (UEs) for random access and contention resolution. A method for operating a UE includes receiving configurations for a first control resource set (CORESET) that includes a first number of resource blocks (RBs) in a frequency domain and a first number of symbols in a time domain, a second CORESET that includes a second number of RBs in the frequency domain and a second number of symbols in the time domain, and a reference signal received power (RSRP) threshold. The method further includes determining a first RSRP value and receiving a first physical downlink control channel (PDCCH). The first PDCCH reception is in the first CORESET when the first RSRP value is larger than the RSRP threshold and the first PDCCH reception is in the second CORESET when the first RSRP value is smaller than the RSRP threshold.

**SUMMARY**

Embodiments of this application provide a random access processing method and apparatus, a terminal, a network-side device, and a storage medium, which can solve the problem of low reliability of random access in the existing technology.

According to a first aspect, a random access processing method is provided, including:

transmitting, by a terminal, a preamble with repetitions on a plurality of physical random access channel occasions (RO), where the preamble is used for random access; and
starting, by the terminal, a random access response (RAR) window, and monitoring RAR information.

The RAR window starts from a first symbol of an earliest control resource set associated with a first physical downlink control channel (PDCCH), and the first PDCCH is a PDCCH in a Type 1-physical downlink control channel (Type1-PDCCH) common resource set. The RAR window satisfies at least one of the following:

the RAR window is at least one symbol following a last symbol of a first RO occupied by the preamble with repetitions;
the RAR window is at least one symbol following a last symbol of a last RO occupied by the preamble with repetitions; and
the RAR window is at least one symbol following a last symbol of each RO occupied by the preamble with repetitions. In a case that one synchronization signal block corresponds to one RO, the plurality of ROs are located at RO positions corresponding to the same synchronization signal block in an association period, and the preamble transmitted with repetitions has a same preamble index.

According to a second aspect, a random access processing method is provided, including:

receiving, by a network-side device, a preamble with repetitions on a plurality of physical random access channel occasions (RO), where the preamble is used for random access of a terminal;
determining, by the network-side device, a random access response (RAR) window; and
sending, by the network-side device, RAR information in the RAR window.

2

The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following:

the RAR window is at least one symbol following a last symbol of a first RO occupied by the preamble with repetitions;
the RAR window is at least one symbol following a last symbol of a last RO occupied by the preamble with repetitions; and
the RAR window is at least one symbol following a last symbol of each RO occupied by the preamble with repetitions. In a case that one synchronization signal block corresponds to one RO, the plurality of ROs are located at RO positions corresponding to the same synchronization signal block in an association period, and the preamble transmitted with repetitions has a same preamble index.

According to a third aspect, a terminal is provided. The terminal includes a processor, a memory, and programs or instructions stored in the memory and executable on the processor. The programs or instructions, when executed by the processor, implement the steps of the method as described in the first aspect.

According to a fourth aspect, a network-side device is provided. The network-side device includes a processor, a memory, and programs or instructions stored in the memory and executable on the processor. The programs or instructions, when executed by the processor, implement the steps of the method as described in the second aspect. The scope of the invention is as defined by the claims.

## BRIEF DESCRIPTION OF THE DRAWINGS

FIG. 1 is a structural diagram of a network system to which embodiments of this application are applicable;
FIG. 2 is a flowchart of a random access processing method according to embodiments of this application;
FIG. 3 is an example diagram 1 of a random access processing method according to embodiments of this application;
FIG. 4 is an example diagram 2 of a random access processing method according to embodiments of this application;
FIG. 5 is an example diagram 3 of a random access processing method according to embodiments of this application;
FIG. 6 is an example diagram 4 of a random access processing method according to embodiments of this application;
FIG. 7 is a flowchart of another random access processing method according to embodiments of this application;
FIG. 8 is a structural diagram of a random access processing apparatus according to embodiments of this application;
FIG. 9 is a structural diagram of a random access processing apparatus according to embodiments of this application;
FIG. 10 is a structural diagram of a communication device according to embodiments of this application;
FIG. 11 is a structural diagram of a terminal according to embodiments of this application; and
FIG. 12 is a structural diagram of a network-side device according to embodiments of this application.

## DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by those skilled in the art based on embodiments of this application fall within the protection scope of this application.

The terms "first", "second", and the like in the specification and claims of this application are used to distinguish similar objects and are not used to describe a particular order or priority. It should be understood that the terms so used are interchangeable where appropriate, whereby embodiments of this application can be practiced in an order other than those illustrated or described herein, and that the objects distinguished by "first" and "second" are generally one class and the number of objects is not limited. For example, there may be one or more first objects. Furthermore, "and/or" in the specification and claims represents at least one of the connected objects, and the character "/" generally represents that the associated objects are in an "or" relationship.

It is to be noted that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in embodiments of this application are often used interchangeably, and the described techniques may be used for both the above-mentioned systems and radio technologies and for other systems and radio technologies. The following description describes a new radio (New Radio, NR) system for example purposes and uses the NR term in most of the following descriptions, but these technologies may also be applied to applications other than NR system applications, such as 6th generation (6th Generation, 6G) communication systems.

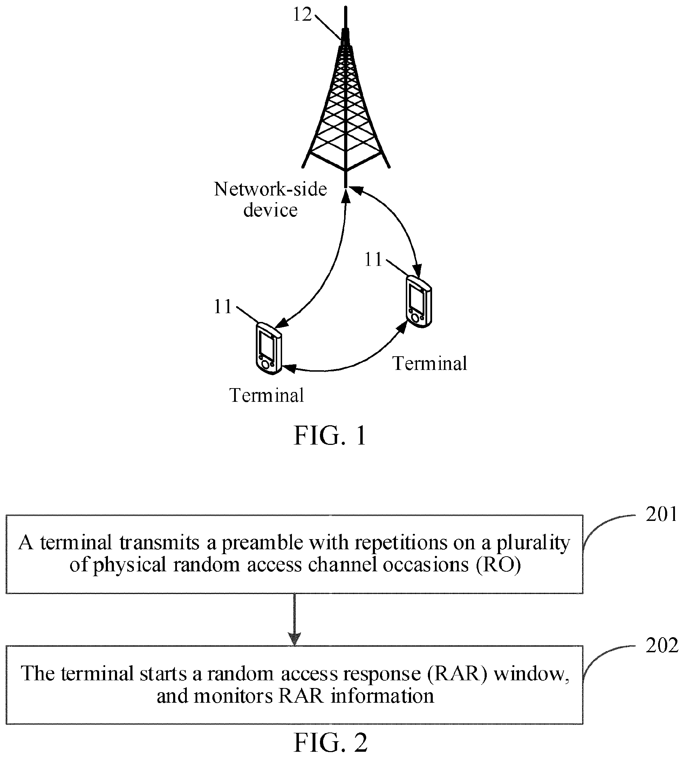

FIG. 1 shows a block diagram of a wireless communication system to which embodiments of this application are applicable. The wireless communication system includes a terminal 11 and a network-side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home (home equipment with a wireless communication function, such as a refrigerator, a TV set, a laundry machine or furniture), or other terminal-side devices. The wearable device includes: smart watches, smart bands, smart headphones, smart glasses, smart jewelry (smart bracelets, smart chain bracelets, smart rings, smart necklaces, smart chain anklets, and the like), smart wristbands, smart clothing, game consoles, and the like. It should be noted that the specific type of the terminal 11 is not limited in this embodiment of this application. The network-side device 12 may be a base station or a core network device. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a wireless local area network (Wireless Local Area Network, WLAN) access point, a wireless fidelity (Wireless Fidelity, WiFi) node, a transmitting receiving point (Transmitting Receiving Point, TRP), or some other suitable terms in the art. The base station is not limited to specific technical vocabulary, provided that the same technical effect is achieved. It should be noted that in this embodiment of this application, only the base station in the NR system is taken as an example, but the specific type of the base station is not limited.

For convenience of understanding, some of the contents related to this embodiment of this application are described below:

1. 4-Step Random Access Procedure

After a cell search process, a terminal and a cell achieve downlink synchronization, which means that the terminal may receive downlink data. However, only when the terminal and the cell achieve uplink synchronization, uplink transmission can be performed. The terminal establishes a connection with the cell via a random access process and achieves uplink synchronization.

The 4-step random access procedure includes the following steps:

Step 1: The terminal sends a random access preamble (preamble). That is, the terminal sends message 1 (MSG1), and a preamble is carried in MSG1. A network-side device is informed of a random access request by the preamble, and the network-side device can estimate a transmission delay between the remaining terminals, calibrate an uplink sending timer (timing), and inform the terminal of calibration information via a tracking area (Tracking Area, TA). At present, it is being discussed to allow the preamble with repetitions to be transmitted (repetition). Each transmission will produce a verifiable radio network temporary identifier (Radio Network Temporary Identifier, RNTI) and will affect a design method for a random access response (Random Access Response, RAR) window and a specific value of the RNTI finally received.

Step 2: The terminal receives a random access response sent by a network-side device. That is, the terminal receives message 2 (MSG2), and the random access response is carried in MSG2. Specifically, after sending the preamble, the terminal will monitor a physical downlink control channel (Physical Downlink Control Channel, PDCCH) within an RAR time window to receive a PDCCH corresponding to a random access RNTI (Random Access-RNTI, RA-RNTI). After successful reception, specific MSG2 information issued by a PDSCH scheduled by the PDCCH will be acquired, including a preamble identifier of random access (Random Access, RA), TA information, resource information of a physical uplink shared channel (Physical Uplink Shared Channel, PUSCH), and a temporary cell (Temporary cell, TC) RNTI. If an RAR returned from the network-side device is not received within the RAR time window or the verification fails, the response is considered to have failed. At this moment, the RA may continue to attempt, and once an upper limit of the number of attempts is exceeded, the RA is considered to have failed.

Step 3: The terminal sends a radio resource control (Radio Resource Control, RRC) connection request. That is, the terminal sends message 3 (MSG3). The terminal sends uplink scheduling information via a PUSCH, and different contents are sent according to different scenarios. For example, in an initial access, a message for establishing an RRC connection is sent, or in an RRC reconnection, an RRC reconnection request is sent. Furthermore, a unique flag of each terminal will be issued for conflict resolution.

Step 4: The terminal receives message 4 (MSG4). This step is conflict resolution. After the terminal sends MSG3, a contention resolution timer will start timing, and the network-side device will carry the unique flag of the terminal in MSG4 to designate a winning terminal. Before the timer expires, the terminal obtains a cell RNTI (Cell RNTI, C-RNTI), or a temporary cell RNTI (Temporary Cell RNTI, TC-RNTI) by monitoring the PDCCH, and a medium access control (Medium Access Control, MAC)-protocol data unit (Protocol Data Unit, PDU) is successfully decoded to obtain a terminal contention resolution flag in a corresponding physical downlink shared channel (Physical downlink shared channel, PDSCH). After the timer expires, the contention is considered to have failed.

2. Setting of RAR Window

The RAR window is started, after a last symbol of sending the preamble, on a first symbol in a control resource set (Control resource set, CORESET) of receiving a PDCCH in a type 1-physical downlink control channel (Type 1-PDCCH) common resource set closest thereto, and is at least one symbol apart from a physical random access channel occasion (Physical Random Access Channel occasion, PRACH occasion). A specific length thereof is not more than 10 ms in a licensed band and 40 ms in a shared band, which is determined according to the number of slots (slot) within ra-ResponseWindow or ra-ResponseWindow-v1610 configured by radio resource control (Radio Resource Control, RRC). The PRACH occasion may be abbreviated as RO.

3. Calculation of RA-RNTI

When the terminal sends the preamble, corresponding time-frequency resources will be recorded to calculate the value of the RA-RNTI. The specific calculation method is as follows:

$$\text{RA-RNTI} = 1 + s\_id + 14 \times t\_id + 14 \times 80 \times f\_id + 14 \times 80 \times 8 \times ul\_carrier\_id.$$

s_id is an index value of a first symbol at the time of sending the PRACH, which is a range value from 0 to 13.

t_id is an index value of a first slot at the time of sending the PRACH in a system frame. For example, if a PRACH format (format) 0 starts to be sent at a first symbol (symbol) of a subframe (subframe) 9, t_id = 9.

f_id is a PRACH sending time in a frequency domain and is determined by msg1_FDM.

ul_carrier_id is a carrier type used by the PRACH, 0 is a normal uplink (Normal Uplink, NUL) carrier, and 1 is a supplementary uplink (Supplementary Uplink, SUL) carrier.

4. Enhancement Scheme of PRACH

An enhancement scheme of the PRACH supports PRACH repetition sending to improve transmission reliability and support random access of users. In the enhancement scheme of the PRACH, the network-side device may pre-configure a plurality of ROs for PRACH repetition sending for the terminal, and the plurality of ROs may be associated with at least one synchronization signal block. The network-side device receives the PRACH with repetitions based on the plurality of ROs. In this way, the receiving gain of the network-side device can be improved, thereby improving the reliability of random access of the terminal. However, according to a relevant random access procedure, the RAR window starts from a starting symbol of CORESET corresponding to the monitored PDCCH, and a plurality of repetitions may form a plurality of RAR windows, which may overlap in the time domain, thereby affecting the determination of a monitoring area of the PDCCH. Furthermore, the corresponding RA-RNTI is generated every time the PRACH is sent, and is used for the network-side device to scramble the corresponding PDCCH. The terminal will determine whether the response is successful according to the result of descrambling the PDCCH generated locally by the corresponding RA-RNTI. However, in the process of PRACH repetition, a plurality of RNTIs will be formed, which will easily lead to inconsistent understanding between the network and users and increase the probability of response failure. For this purpose, a random access processing method according to this application is proposed.

The random access processing method provided by this embodiment of this application will be described in detail with reference to the accompanying drawings through some embodiments and application scenarios thereof.

Reference is made to FIG. 2. FIG. 2 is a flowchart of a random access processing method according to an embodiment of this application. As shown in FIG. 2, the method includes the following steps:

Step 201: A terminal transmits a preamble with repetitions on a plurality of physical random access channel occasions (RO), where the preamble is used for random access.

Step 202: The terminal starts a random access response (RAR) window, and monitors RAR information.

The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following:
The RAR window is at least one symbol following a last symbol of a first RO occupied by the preamble with repetitions.

The RAR window is at least one symbol following a last symbol of a last RO occupied by the preamble with repetitions.

The RAR window is at least one symbol following a last symbol of each RO occupied by the preamble with repetitions.

The random access processing method provided by this embodiment of this application may be applied to the 2-step random access process or the 4-step random access process. When the method is applied to the 2-step random access process, the transmission of the preamble with repetitions by the terminal may be understood as the sending of message A (MSGA) with repetitions by the terminal. When the method is applied to the 4-step random access process, the transmission of the preamble with repetitions by the terminal may be understood as the sending of MSG1 with repetitions by the terminal.

It should be noted that the transmission of the preamble with repetitions may also be understood as transmission of a PRACH with repetitions. The plurality of ROs may include a plurality of target ROs for the transmission of the preamble with repetitions, or the plurality of ROs may be understood as a plurality of target ROs for the transmission of the preamble with repetitions. Further limitations are omitted herein. The target ROs may be referred to as candidate ROs or potential ROs. The plurality of target ROs are pre-configured by the network-side device for transmitting the preamble with repetitions.

Optionally, the RAR window is at least one symbol following a last symbol of a first RO occupied by the preamble with repetitions, which may be understood as: The RAR window is started after the last symbol of the first RO occupied by the preamble with repetitions. In this embodiment of this application, the number of the RAR window is 1, and the RAR window may be configured to receive a random access response corresponding to the first preamble with repetitions that is transmitted.

Optionally, the RAR window is at least one symbol following a last symbol of a last RO occupied by the preamble with repetitions, which may be understood as: The RAR window is started after the last symbol of the last RO occupied by the preamble with repetitions. In this embodiment of this application, the number of the RAR window is 1, and the RAR window may be configured to receive a random access response corresponding to the last preamble with repetitions that is transmitted.

Optionally, the RAR window is at least one symbol following a last symbol of each RO occupied by the preamble with repetitions, which may be understood as: The RAR window corresponding to each preamble is started after the last symbol of each RO occupied by the preamble. In this embodiment of this application, the number of the RAR window may be plural, and the RAR window corresponding to each preamble may be configured to receive a random access response corresponding to the preamble.

It should be noted that in this embodiment of this application, the transmission of the preamble with repetitions on the first RO may be understood as an initial transmission of the preamble, and the transmission of the preamble with repetitions on the second RO and subsequent ROs may be understood as the transmission of the preamble with repetitions.

In this embodiment of this application, a terminal transmits a preamble with repetitions on a plurality of ROs, where the preamble is used for random access. The terminal starts a random access response (RAR) window, and monitors RAR information. The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following: The RAR window is at least one symbol following a last symbol of a first RO occupied by the preamble with repetitions. The RAR window is at least one symbol following a last symbol of a last RO occupied by the preamble with repetitions. The RAR window is at least one symbol following a last symbol of each RO occupied by the preamble with repetitions. As this embodiment of this application clearly defines an RAR window when a preamble with repetitions is transmitted on a plurality of ROs for random access, a reasonable PDCCH monitoring area is provided in preamble repetition transmission, to support the transmission of the preamble with repetitions, thereby improving the reliability of the random access.

Optionally, in some embodiments, the method further includes:
The RAR information is detected within an RAR window at a time point preceding an end time of the RAR window, and the terminal executes a target operation.

The target operation includes any one of the following:
A medium access control (MAC) layer instructs a physical layer to continue to transmit remaining preambles with repetitions on associated ROs, and the physical layer continues to transmit the preambles with repetitions after receiving the instruction.

In a case that an interval between a target symbol and a last symbol of a physical downlink shared channel (PDSCH) bearing the RAR information is greater than or equal to a preset duration, the MAC layer instructs the physical layer to cancel the transmission of the remaining preambles with repetitions on the associated ROs from the transmission of a preamble with repetitions corresponding to an $N^{th}$ RO in the remaining ROs, and the physical layer terminates the transmission of the preamble with repetitions after receiving the instruction. The target symbol is a first symbol of the transmission of the preamble with repetitions corresponding to the $N^{th}$ RO, where N is a positive integer.

In this embodiment of this application, the size of the preset duration may be set according to actual needs. For example, the size may be configured by protocol agreement or the network-side device. In this embodiment of this application, the preset duration may represent time required to cancel the transmission of the preamble with repetitions. Assuming that a time point when the RAR information is detected within the RAR window is t1, the first symbol of the preamble with repetitions corresponding to the $N^{th}$ RO is t2, and a time interval between t1 and t2 is less than the preset duration, it means that there is not enough time to cancel the preamble corresponding to the $N^{th}$ RO, and the terminal may continue to transmit the preamble with repetitions on the $N^{th}$ RO at this moment. If the time interval between t1 and t2 is greater than or equal to the preset duration, it means that the transmission of the preamble with repetitions on the $N^{th}$ RO may be canceled, and the transmission of the remaining preambles with repetitions may be canceled from the $N^{th}$ RO. In this way, signaling overheads and waste of resources can be reduced.

Further, in a case that the RAR information is detected within the RAR window, the terminal may stop running the RAR window and monitoring the PDCCH scrambled by the RA-RNTI.

Optionally, in some embodiments, the method further includes:
The terminal determines a random access radio network temporary identifier (RA-RNTI), where the RA-RNTI is used for scrambling a monitored PDCCH for scheduling the RAR information.

It should be noted that the corresponding RA-RNTI is determined differently for different definitions of the RAR window. For example, in some embodiments, the RA-RNTI satisfies at least one of the following:
In a case that the RAR window is at least one symbol following a last symbol of a first RO occupied by the preamble with repetitions, the RA-RNTI is determined based on the first RO.

In a case that the RAR window is at least one symbol following a last symbol of a last RO occupied by the preamble with repetitions, the RA-RNTI is determined based on an $M^{th}$ RO occupied by the preamble with repetitions, where M is a positive integer.

In a case that the RAR window is at least one symbol following a last symbol of each RO occupied by the preamble with repetitions, the RA-RNTI is determined based on an RO closest to a time point at which the window is opened.

In this embodiment of this application, the RA-RNTI is determined based on the first RO, which may be understood as: The value of the RA-RNTI is calculated based on the RO for transmitting the first preamble with repetitions. Alternatively, the value of the RA-RNTI may be calculated based on the RO for transmitting the first PRACH with repetitions.

Optionally, the RA-RNTI is determined based on an $M^{th}$ RO occupied by the preamble with repetitions, which may be understood as: The value of the RA-RNTI is calculated based on the RO for transmitting any preamble with repetitions. Alternatively, the value of the RA-RNTI may be calculated based on the RO for transmitting any PRACH with repetitions. M is indicated by a protocol agreement or a network-side device. For example, the RA-RNTI is calculated in a unified manner by default with the RO for the third repetition. In some embodiments, the value of the RA-RNTI may also be calculated based on the RO for the first or last preamble with repetitions. The specific value is not further limited herein.

Optionally, in some embodiments, in a case that RAR windows of a plurality of ROs occupied by the preamble with repetitions do not overlap, the RAR window is at least one symbol following a last symbol of each RO occupied by the preamble with repetitions, or the terminal does not expect that the RAR windows do not overlap.

In this embodiment of this application, the terminal does not expect that the RAR windows do not overlap, which may be understood as: The terminal does not expect that a window length of the RAR window is shorter than an RO interval.

Optionally, in a case that the RAR window is at least one symbol following a last symbol of each RO occupied by the preamble with repetitions, the method further includes:
In a case that a target RO among the plurality of ROs satisfies a preset condition, the terminal determines that the target RO is a valid RO (valid PRACH occasions).

In a case that the target RO does not satisfy the preset condition, the terminal determines that the preamble with repetitions is prohibited from being transmitted on the target RO.

In this embodiment of this application, the transmission of the preamble with repetitions on the target RO is allowed when the target RO satisfies the preset condition. The transmission of the preamble with repetitions on the target RO is not allowed when the target RO does not satisfy the preset condition.

Optionally, the situation that the target RO does not satisfy the preset condition includes at least one of the following:
The target RO is pre-configured as a downlink symbol or a flexible symbol.

The target RO is indicated as a downlink symbol or a flexible symbol by a slot format indication (Slot Format Indication, SFI).

In a case that the terminal is a half duplex frequency division duplex (Half Duplex Frequency Division Duplex, HD-FDD) terminal, the target RO overlaps a synchronization signal block (Synchronization Signal and PBCH block, SSB).

In a case that the terminal supports time division duplex (Time Division Duplex, TDD), the number of symbols between the target RO and the last downlink symbol preceding the same is less than or equal to a first threshold.

In a case that the terminal supports the TDD, the number of symbols between the target RO and the closest synchronization signal block is less than or equal to a second threshold.

In this embodiment of this application, the sizes of the first threshold and the second threshold may be set according to actual needs. In some embodiments, the first threshold and the second threshold may be indicated by protocol agreement or the network-side device. Further limitations are omitted herein.

It should be understood that if the target RO satisfies any of the above conditions, the transmission of the target RO will be affected and the transmission of the preamble with repetitions cannot be performed on the target RO.

It should be noted that the definition of the number of transmissions of the preamble with repetitions may be set according to actual needs. For example, in some embodiments, in a case that the RAR window is at least one symbol following a last symbol of each RO occupied by the preamble with repetitions, the method further includes any one of the following:

The terminal determines the number of transmissions of the preamble with repetitions based on the number of valid ROs.

The terminal determines the number of transmissions of the preamble with repetitions based on the number of target ROs.

Optionally, in some embodiments, the plurality of ROs are associated with a same synchronization signal block. Definitely, in other embodiments, the plurality of ROs may also be associated with at least two synchronization signal blocks.

Optionally, in some embodiments, resources of the plurality of ROs are continuous in a frequency division manner or continuous in a time division manner.

It should be understood that one synchronization signal block may correspond to one RO or to a plurality of ROs.

In a case that one synchronization signal block corresponds to one RO, the plurality of ROs are located at RO positions corresponding to the same synchronization signal block in an association period (association period), and the preamble with repetitions has a same preamble index.

Optionally, in a case that one synchronization signal block corresponds to at least two ROs, the plurality of ROs are located at RO positions corresponding to the same synchronization signal block in an association period.

In order to better understand this application, the following is explained in detail by some specific examples.

Embodiment 1: Assuming that an RAR window corresponding to a first PRACH occasion in transmission of a PRACH with repetitions is an RAR window of the transmission of the PRACH with repetitions, the value of an RA-RNTI is calculated with an RO of the first PRACH occasion.

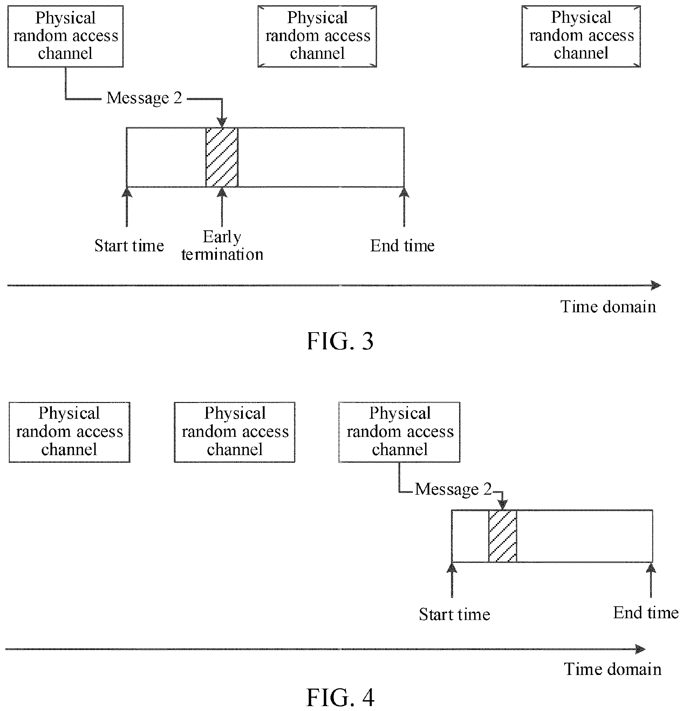

As shown in FIG. 3, if a PDCCH scrambled by the RA-RNTI is monitored in a downlink symbol (DL symbol) within the RAR window and a preamble identifier in a scheduled PDSCH is the same as an identifier sent by the terminal, an RA response is considered to be successful. At this moment, preferably, the remaining PRACH repetition transmissions are canceled immediately.

Embodiment 2: It is assumed that after transmission of a PRACH with repetitions is completed, an RAR window corresponding to a last PRACH occasion serves as an RAR window of the transmission of the PRACH with repetitions.

In this embodiment of this application, it is possible to calculate the value of an RA-RNTI with the first, second, or last PRACH occasion, as long as rules defined or adopted by default by the network-side device and the terminal are uniform. As shown in FIG. 4, if a PDCCH scrambled by the RA-RNTI is monitored in a DL symbol within the RAR window and a preamble identifier in a scheduled PDSCH is the same as an identifier sent by the terminal, an RA response is considered to be successful.

Embodiment 3: It is assumed that each time a PRACH occasion is completed, there will be a new RAR window start position correspondingly. When the new RAR window starts, the original RAR window automatically terminates.

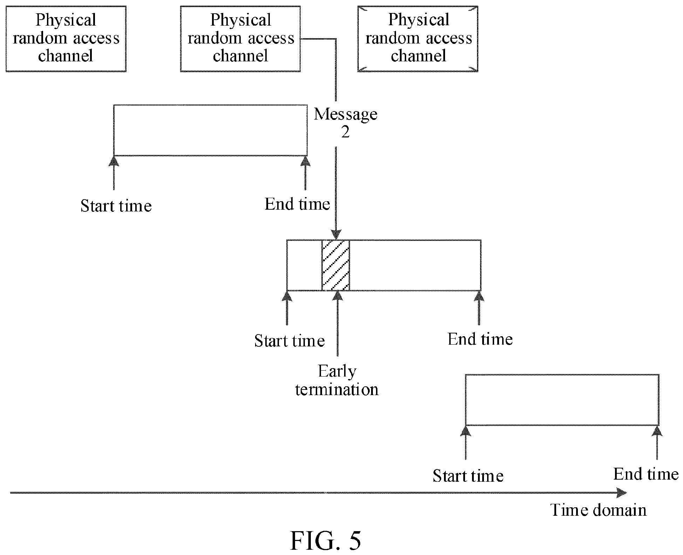

As shown in FIG. 5, a corresponding RA-RNTI is also calculated with an RO of the closest PRACH occasion in front of the RAR window. If a PDCCH scrambled by the RA-RNTI is monitored in a DL symbol within the RAR window and a preamble identifier in a scheduled PDSCH is the same as an identifier sent by the terminal, an RA response is considered to be successful. If not in the last PRACH occasion at this moment, it is preferable to execute early termination (early termination) and cancel the remaining PRACH occasion transmissions.

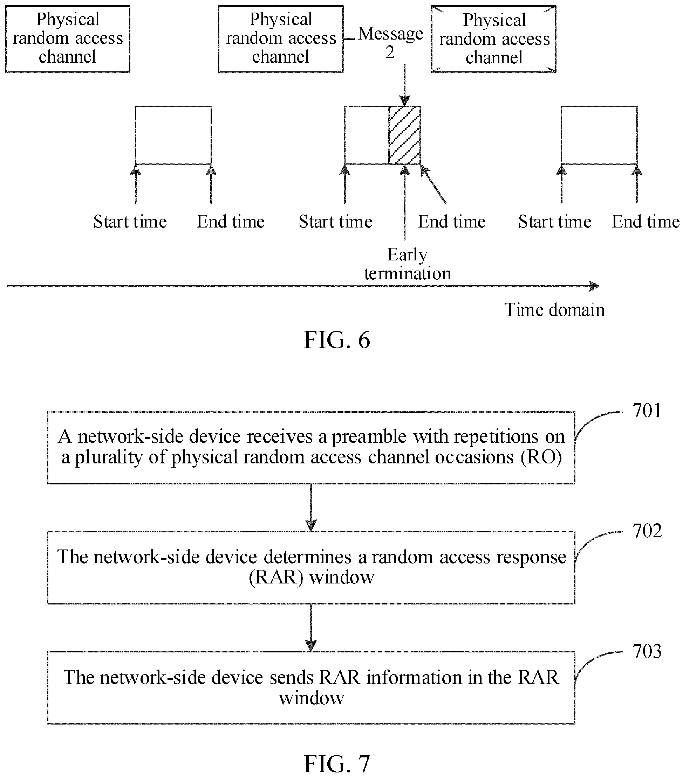

Embodiment 4: As shown in FIG. 6, it is assumed that an RAR window configuration is relatively small, which is less than a PRACH transmission duration.

In this embodiment of this application, the transmission is carried out in the manner of Embodiment 3. That is, the RAR window for the transmission of the PRACH with repetitions is updated with the RAR window corresponding to the transmission after each PRACH occasion is completed. Definitely, since it is almost impossible to configure the RAR window shorter than the PRACH transmission duration, it may be specified that the terminal does not expect the RAR window to be shorter than a repetition interval to avoid this situation.

Reference is made to FIG. 7. FIG. 7 is a flowchart of another random access processing method according to an embodiment of this application. As shown in FIG. 7, the method includes the following steps:

Step 701: A network-side device receives a preamble with repetitions on a plurality of physical random access channel occasions (RO), where the preamble is used for random access of a terminal.

Step 702: The network-side device determines a random access response (RAR) window.

Step 703: The network-side device sends RAR information in the RAR window.

The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following:

The RAR window is at least one symbol following a last symbol of a first RO occupied by the preamble with repetitions.

The RAR window is at least one symbol following a last symbol of a last RO occupied by the preamble with repetitions.

The RAR window is at least one symbol following a last symbol of each RO occupied by the preamble with repetitions.

Optionally, the method further includes:

The network-side device determines a random access radio network temporary identifier (RA-RNTI), where the RA-RNTI is used for scrambling a PDCCH for scheduling the RAR information.

Optionally, the RA-RNTI satisfies at least one of the following:

In a case that the RAR window is at least one symbol following a last symbol of a first RO occupied by the preamble with repetitions, the RA-RNTI is determined based on the first RO.

In a case that the RAR window is at least one symbol following a last symbol of a last RO occupied by the preamble with repetitions, the RA-RNTI is determined based on an $M^{th}$ RO occupied by the preamble with repetitions, where M is a positive integer.

In a case that the RAR window is at least one symbol following a last symbol of each RO occupied by the preamble with repetitions, the RA-RNTI is determined based on an RO closest to a time point at which the RAR window is opened.

Optionally, M is indicated by a protocol agreement or the network-side device.

Optionally, in a case that RAR windows of a plurality of ROs occupied by the preamble with repetitions do not overlap, the RAR window is at least one symbol following a last symbol of each RO occupied by the preamble with repetitions.

Optionally, in a case that the RAR window is at least one symbol following a last symbol of each RO occupied by the preamble with repetitions, the method further includes:

In a case that a target RO among the plurality of ROs satisfies a preset condition, the network-side device determines that the target RO is a valid RO.

In a case that the target RO does not satisfy the preset condition, the network-side device determines that the preamble with repetitions is prohibited from being received on the target RO.

Optionally, the situation that the target RO does not satisfy the preset condition includes at least one of the following:

The target RO is pre-configured as a downlink symbol or a flexible symbol.

The target RO is indicated as a downlink symbol or a flexible symbol by a slot format indication (SFI).

In a case that the terminal is a half duplex frequency division duplex (HD-FDD) terminal, the target RO overlaps a synchronization signal block.

In a case that the terminal supports time division duplex (TDD), the number of symbols between the target RO and the last downlink symbol preceding the same is less than or equal to a first threshold.

In a case that the terminal supports the TDD, the number of symbols between the target RO and the closest synchronization signal block is less than or equal to a second threshold.

Optionally, in a case that the RAR window is at least one symbol following a last symbol of each RO occupied by the preamble with repetitions, the method further includes any one of the following:

The network-side device determines the number of receptions of the preamble with repetitions based on the number of valid ROs.

The network-side device determines the number of receptions of the preamble with repetitions based on the number of target ROs.

Optionally, the plurality of ROs are associated with a same synchronization signal block.

Optionally, in some embodiments, resources of the plurality of ROs are continuous in a frequency division manner or continuous in a time division manner.

In a case that one synchronization signal block corresponds to one RO, the plurality of ROs are located at RO positions corresponding to the same synchronization signal block in an association period, and the preamble with repetitions has a same preamble index.

Optionally, in a case that one synchronization signal block corresponds to at least two ROs, the plurality of ROs are located at RO positions corresponding to the same synchronization signal block in an association period.

It should be noted that this embodiment is an implementation of a corresponding network-side device in the embodiment shown in FIG. 2. For a specific implementation of this embodiment, reference may be made to related descriptions in the embodiment shown in FIG. 2, and the same beneficial effect may be achieved. To avoid repeated descriptions, details are not repeated herein.

It should be noted that an execution entity of the random access processing method provided by this embodiment of this application may be a random access processing apparatus or a control module in the random access processing apparatus for performing the random access processing method. In this embodiment of this application, the random access processing apparatus provided by this embodiment of this application is explained with an example where the random access processing apparatus performs the random access processing method.

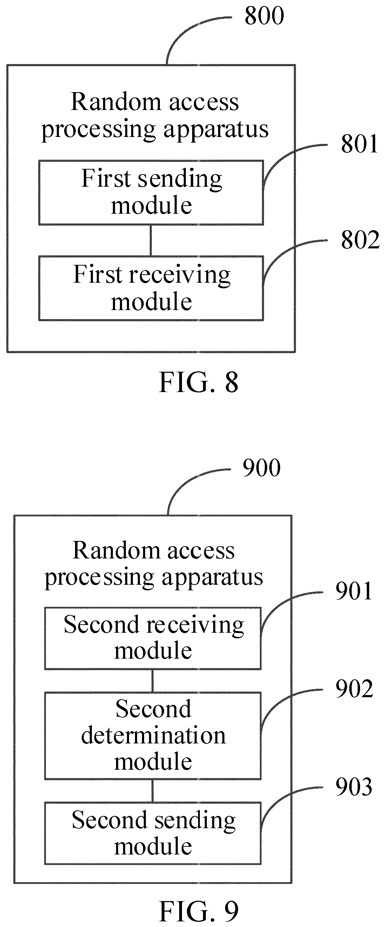

Reference is made to FIG. 8. FIG. 8 is a structural diagram of a random access processing apparatus according to an embodiment of this application. As shown in FIG. 8, a random access processing apparatus 800 includes:

a first sending module 801, configured to transmit a preamble with repetitions on a plurality of physical random access channel occasions (RO), where the preamble is used for random access of a terminal; and

a first receiving module 802, configured to start a random access response (RAR) window, and monitor RAR information.

The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following:

The RAR window is at least one symbol following a last symbol of a first RO occupied by the preamble with repetitions.

The RAR window is at least one symbol following a last symbol of a last RO occupied by the preamble with repetitions.

The RAR window is at least one symbol following a last symbol of each RO occupied by the preamble with repetitions.

Optionally, the random access processing apparatus 800 further includes:

an execution module, configured to detect the RAR information within an RAR window at a time point preceding an end time of the RAR window, and execute a target operation.

The target operation includes any one of the following:

A medium access control (MAC) layer instructs a physical layer to continue to transmit remaining preambles with repetitions on associated ROs, and the physical layer continues to transmit the preambles with repetitions after receiving the instruction.

In a case that an interval between a target symbol and a last symbol of a physical downlink shared channel (PDSCH) bearing the RAR information is greater than or equal to a preset duration, the MAC layer instructs the physical layer to cancel the transmission of the remaining preambles with repetitions on the associated ROs from the transmission of a preamble with repetitions corresponding to an $N^{th}$ RO in the remaining ROs, and the physical layer terminates the transmission of the preamble with repetitions after receiving the instruction. The target symbol is a first symbol of the transmission of the preamble with repetitions corresponding to the $N^{th}$ RO, where N is a positive integer.

Optionally, the random access processing apparatus 800 further includes:

a first determination module, configured to determine a random access radio network temporary identifier (RA-RNTI), where the RA-RNTI is used for scrambling a monitored PDCCH for scheduling the RAR information.

Optionally, the RA-RNTI satisfies at least one of the following:

In a case that the RAR window is at least one symbol following a last symbol of a first RO occupied by the preamble with repetitions, the RA-RNTI is determined based on the first RO.

In a case that the RAR window is at least one symbol following a last symbol of a last RO occupied by the preamble with repetitions, the RA-RNTI is determined based on an $M^{th}$ RO occupied by the preamble with repetitions, where M is a positive integer.

In a case that the RAR window is at least one symbol following a last symbol of each RO occupied by the preamble with repetitions, the RA-RNTI is determined based on an RO closest to a time point at which the RAR window is opened.

Optionally, M is indicated by a protocol agreement or a network-side device.

Optionally, in a case that RAR windows of a plurality of ROs occupied by the preamble with repetitions do not overlap, the RAR window is at least one symbol following a last symbol of each RO occupied by the preamble with repetitions, or the terminal does not expect that the RAR windows do not overlap.

Optionally, in a case that the RAR window is at least one symbol following a last symbol of each RO occupied by the preamble with repetitions, the random access processing apparatus 800 further includes:

a first determination module, configured to: determine, by the terminal in a case that a target RO among the plurality of ROs satisfies a preset condition, that the target RO is a valid RO; and determine, by the terminal in a case that the target RO does not satisfy the preset condition, that the preamble with repetitions is prohibited from being transmitted on the target RO.

Optionally, the situation that the target RO does not satisfy the preset condition includes at least one of the following:

The target RO is pre-configured as a downlink symbol or a flexible symbol.

The target RO is indicated as a downlink symbol or a flexible symbol by a slot format indication (SFI).

In a case that the terminal is a half duplex frequency division duplex (HD-FDD) terminal, the target RO overlaps a synchronization signal block.

In a case that the terminal supports time division duplex (TDD), the number of symbols between the target RO and the last downlink symbol preceding the same is less than or equal to a first threshold.

In a case that the terminal supports the TDD, the number of symbols between the target RO and the closest synchronization signal block is less than or equal to a second threshold.

Optionally, in a case that the RAR window is at least one symbol following a last symbol of each RO occupied by the preamble with repetitions, the random access processing apparatus 800 further includes a first determination module, configured to:

determine the number of transmissions of the preamble with repetitions based on the number of valid ROs, or
determine the number of transmissions of the preamble with repetitions based on the number of target ROs.

Optionally, the plurality of ROs are associated with a same synchronization signal block.

Optionally, in some embodiments, resources of the plurality of ROs are continuous in a frequency division manner or continuous in a time division manner.

In a case that one synchronization signal block corresponds to one RO, the plurality of ROs are located at RO positions corresponding to the same synchronization signal block in an association period, and the preamble with repetitions has a same preamble index.

Optionally, in a case that one synchronization signal block corresponds to at least two ROs, the plurality of ROs are located at RO positions corresponding to the same synchronization signal block in an association period.

The random access processing apparatus provided by this embodiment of this application can implement all processes in the method embodiments shown in FIG. 2. To avoid repetitions, details are not repeated herein.

Reference is made to FIG. 9. FIG. 9 is a structural diagram of a random access processing apparatus according to an embodiment of this application. As shown in FIG. 9, a random access processing apparatus 900 includes:

a second receiving module 901, configured to receive a preamble with repetitions on a plurality of physical random access channel occasions (RO), where the preamble is used for random access of a terminal;
a second determination module 902, configured to determine a random access response (RAR) window; and
a second sending module 903, configured to send RAR information in the RAR window,

The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following:

The RAR window is at least one symbol following a last symbol of a first RO occupied by the preamble with repetitions.

The RAR window is at least one symbol following a last symbol of a last RO occupied by the preamble with repetitions.

The RAR window is at least one symbol following a last symbol of each RO occupied by the preamble with repetitions.

Optionally, the second determination module 902 is further configured to: determine a random access radio network temporary identifier (RA-RNTI), where the RA-RNTI is used for scrambling a PDCCH for scheduling the RAR information.

Optionally, the RA-RNTI satisfies at least one of the following:

In a case that the RAR window is at least one symbol following a last symbol of a first RO occupied by the preamble with repetitions, the RA-RNTI is determined based on the first RO.

In a case that the RAR window is at least one symbol following a last symbol of a last RO occupied by the preamble with repetitions, the RA-RNTI is determined based on an $M^{th}$ RO occupied by the preamble with repetitions, where M is a positive integer.

In a case that the RAR window is at least one symbol following a last symbol of each RO occupied by the preamble with repetitions, the RA-RNTI is determined based on an RO closest to a time point at which the RAR window is opened.

Optionally, M is indicated by a protocol agreement or a network-side device.

Optionally, in a case that RAR windows of a plurality of ROs occupied by the preamble with repetitions do not overlap, the RAR window is at least one symbol following a last symbol of each RO occupied by the preamble with repetitions.

Optionally, in a case that the RAR window is at least one symbol following a last symbol of each RO occupied by the preamble with repetitions, the second determination module 902 is further configured to perform the following operations:

In a case that a target RO among the plurality of ROs satisfies a preset condition, the network-side device determines that the target RO is a valid RO.

In a case that the target RO does not satisfy the preset condition, the network-side device determines that the preamble with repetitions is prohibited from being received on the target RO.

Optionally, the situation that the target RO does not satisfy the preset condition includes at least one of the following:

The target RO is pre-configured as a downlink symbol or a flexible symbol.

The target RO is indicated as a downlink symbol or a flexible symbol by a slot format indication (SFI).

In a case that the terminal is a half duplex frequency division duplex (HD-FDD) terminal, the target RO overlaps a synchronization signal block.

In a case that the terminal supports time division duplex (TDD), the number of symbols between the target RO and the last downlink symbol preceding the same is less than or equal to a first threshold.

In a case that the terminal supports the TDD, the number of symbols between the target RO and the closest synchronization signal block is less than or equal to a second threshold.

Optionally, in a case that the RAR window is at least one symbol following a last symbol of each RO occupied by the preamble with repetitions, the second determination module 902 is further configured to:

determine the number of receptions of the preamble with repetitions based on the number of valid ROs, or

determine the number of receptions of the preamble with repetitions based on the number of target ROs.

Optionally, the plurality of ROs are associated with a same synchronization signal block.

Optionally, in some embodiments, resources of the plurality of ROs are continuous in a frequency division manner or continuous in a time division manner.

In a case that one synchronization signal block corresponds to one RO, the plurality of ROs are located at RO positions corresponding to the same synchronization signal block in an association period, and the preamble with repetitions has a same preamble index.

Optionally, in a case that one synchronization signal block corresponds to at least two ROs, the plurality of ROs are located at RO positions corresponding to the same synchronization signal block in an association period.

The random access processing apparatus provided by this embodiment of this application can implement all processes in the method embodiments shown in FIG. 7. To avoid repetitions, details are not repeated herein.

The random access processing apparatus in this embodiment of this application may be an apparatus, an apparatus or electronic device with an operating system, or a component, an integrated circuit or a chip in a terminal. The apparatus may be a mobile terminal or may be a non-mobile terminal. For example, the mobile terminal may include, but is not limited to, the type of the terminal 11 listed above, and the non-mobile terminal may be a server, a network attached storage (Network Attached Storage, NAS), a personal computer (personal computer, PC), a television (television, TV), an automatic teller machine, or a self-service machine, and the like. This embodiment of this application is not specifically limited.

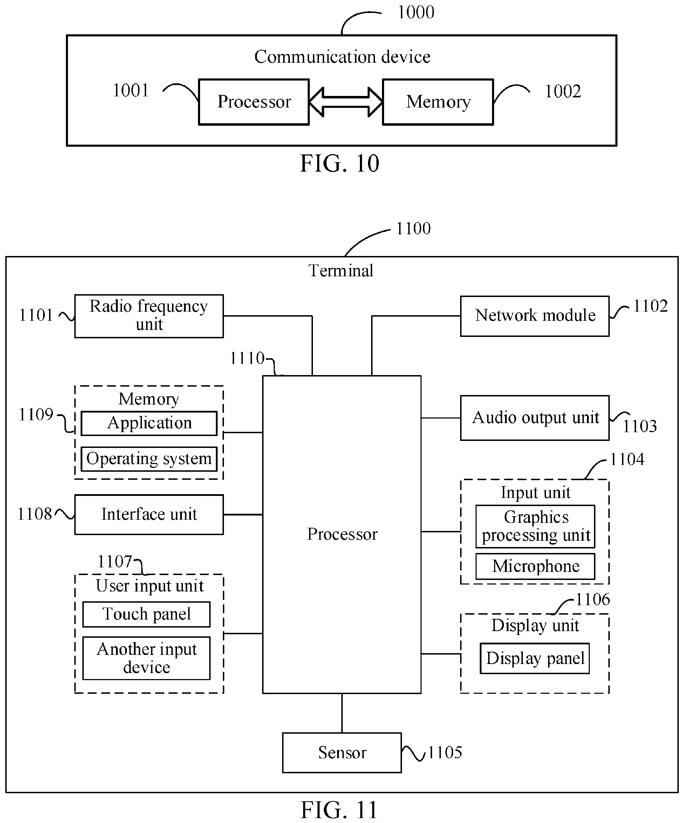

Optionally, as shown in FIG. 10, embodiments of this application further provide a communication device 1000, including a processor 1001, a memory 1002, and programs or instructions stored in the memory 1002 and executable on the processor 1001. The programs or instructions, when executed by the processor 1001, implement the various processes of the embodiments of the random access processing method and can achieve the same technical effect. To avoid repetitions, details are not repeated herein.

Non-claimed embodiments of this application further provide a terminal, including a processor and a communication interface. The communication interface is configured to: transmit a preamble with repetitions on a plurality of physical random access channel occasions (RO), where the preamble is used for random access of a terminal; and start a random access response (RAR) window, and monitor RAR information. The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following: The RAR window is at least one symbol following a last symbol of a first RO occupied by the preamble with repetitions. The RAR window is at least one symbol following a last symbol of a last RO occupied by the preamble with repetitions. The RAR window is at least one symbol following a last symbol of each RO occupied by the preamble with repetitions. The terminal embodiments correspond to the foregoing terminal-side method embodiments. Each implementation process and implementation of the foregoing method embodiments may be applied to the terminal embodiments, and can achieve the same technical effect. Specifically, FIG. 11 is a schematic diagram of a hardware structure of a terminal according to embodiments of this application.

The terminal 1100 includes, but is not limited to, at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

It will be appreciated by those skilled in the art that the terminal 1100 may further include a power supply (such as a battery) for supplying power to the components. The power supply may be logically connected to the processor 1110 by a power management system, thereby implementing functions such as charging, discharging, and power consumption management by using the power management system. The terminal structure shown in FIG. 11 does not constitute a limitation on the terminal, and the terminal may include more or fewer components than shown, or combine some components, or have different component arrangements. Details are not repeated herein.

It will be understood that in this embodiment of this application, the input unit 1104 may include a graphics processing unit (Graphics Processing Unit, GPU) and a microphone. The graphics processing unit performs processing on image data of a static picture or a video that is obtained by an image capture apparatus (for example, a camera) in a video capture mode or an image capture mode. The display unit 1106 may include a display panel. The display panel may be configured by using a liquid crystal display, an organic light-emitting diode, or the like. The user input unit 1107 includes a touch panel and another input device. The touch panel is also referred to as a touch screen. The touch panel may include two parts: a touch detection apparatus and a touch controller. The another input device may include, but is not limited to, a physical keyboard, a functional key (such as a volume control key or a switch key), a track ball, a mouse, and a joystick. Details are not repeated herein.

In this embodiment of this application, the radio frequency unit 1101 receives downlink data from a network-side device and then transmits the downlink data to the processor 1110 for processing. In addition, uplink data is sent to the network-side device. Generally, the radio frequency unit 1101 includes, but is not limited to, an antenna, at least one amplifier, a transceiver, a coupler, a low noise amplifier, a duplexer, and the like.

The memory 1109 may be configured to store software programs or instructions and various data. The memory 109 may mainly include a program or instruction storage area and a data storage area. The program or instruction storage area may store an operating system, an application or instruction required by at least one function (such as a sound playback function and an image display function), and the like. Furthermore, the memory 1109 may include a high-speed random access memory and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk memory, a flash memory, or another non-volatile solid-state memory.

The processor 1110 may include one or more processing units. Optionally, the processor 1110 may integrate an application processor and a modem processor. The application processor mainly processes an operating system, a user interface, an application or instruction, and the like. The modem processor mainly processes wireless communication such as a baseband processor. It will be understood that the foregoing modem may either not be integrated into the processor 1110.

The radio frequency unit 1101 is configured to:

transmit a preamble with repetitions on a plurality of physical random access channel occasions (RO), where the preamble is used for random access of a terminal; and
start a random access response (RAR) window, and monitor RAR information.

The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following:

The RAR window is at least one symbol following a last symbol of a first RO occupied by the preamble with repetitions.

The RAR window is at least one symbol following a last symbol of a last RO occupied by the preamble with repetitions.

The RAR window is at least one symbol following a last symbol of each RO occupied by the preamble with repetitions.

Optionally, the processor 1110 is configured to detect the RAR information within an RAR window at a time point preceding an end time of the RAR window, and execute a target operation.

The target operation includes any one of the following:

A medium access control (MAC) layer instructs a physical layer to continue to transmit remaining preambles with repetitions on associated ROs, and the physical layer continues to transmit the preambles with repetitions after receiving the instruction.

In a case that an interval between a target symbol and a last symbol of a physical downlink shared channel (PDSCH) bearing the RAR information is greater than or equal to a preset duration, the MAC layer instructs the physical layer to cancel the transmission of the remaining preambles with repetitions on the associated ROs from the transmission of a preamble with repetitions corresponding to an $N^{th}$ RO in the remaining ROs, and the physical layer terminates the transmission of the preamble with repetitions after receiving the instruction. The target symbol is a first symbol of the transmission of the preamble with repetitions corresponding to the $N^{th}$ RO, where N is a positive integer.

Optionally, the processor 1110 is further configured to determine a random access radio network temporary identifier (RA-RNTI), where the RA-RNTI is used for scrambling a monitored PDCCH for scheduling the RAR information.

Optionally, the RA-RNTI satisfies at least one of the following:

In a case that the RAR window is at least one symbol following a last symbol of a first RO occupied by the preamble with repetitions, the RA-RNTI is determined based on the first RO.

In a case that the RAR window is at least one symbol following a last symbol of a last RO occupied by the preamble with repetitions, the RA-RNTI is determined based on an $M^{th}$ RO occupied by the preamble with repetitions, where M is a positive integer.

In a case that the RAR window is at least one symbol following a last symbol of each RO occupied by the preamble with repetitions, the RA-RNTI is determined based on an RO closest to a time point at which the RAR window is opened.

Optionally, M is indicated by a protocol agreement or a network-side device.

Optionally, in a case that RAR windows of a plurality of ROs occupied by the preamble with repetitions do not overlap, the RAR window is at least one symbol following a last symbol of each RO occupied by the preamble with repetitions, or the terminal does not expect that the RAR windows do not overlap.

Optionally, in a case that the RAR window is at least one symbol following a last symbol of each RO occupied by the preamble with repetitions, the processor 1110 is further configured to: determine, by the terminal in a case that a target RO among the plurality of ROs satisfies a preset condition, that the target RO is a valid RO; and determine, by the terminal in a case that the target RO does not satisfy the preset condition, that the preamble with repetitions is prohibited from being transmitted on the target RO.

Optionally, the situation that the target RO does not satisfy the preset condition includes at least one of the following:

The target RO is pre-configured as a downlink symbol or a flexible symbol.

The target RO is indicated as a downlink symbol or a flexible symbol by a slot format indication (SFI).

In a case that the terminal is a half duplex frequency division duplex (HD-FDD) terminal, the target RO overlaps a synchronization signal block.

In a case that the terminal supports time division duplex (TDD), the number of symbols between the target RO and the last downlink symbol preceding the same is less than or equal to a first threshold.

In a case that the terminal supports the TDD, the number of symbols between the target RO and the closest synchronization signal block is less than or equal to a second threshold.

Optionally, in a case that the RAR window is at least one symbol following a last symbol of each RO occupied by the preamble with repetitions, the processor 1110 is further configured to:

determine the number of transmissions of the preamble with repetitions based on the number of valid ROs, or
determine the number of transmissions of the preamble with repetitions based on the number of target ROs.

Optionally, the plurality of ROs are associated with a same synchronization signal block.

Optionally, in some embodiments, resources of the plurality of ROs are continuous in a frequency division manner or continuous in a time division manner.

In a case that one synchronization signal block corresponds to one RO, the plurality of ROs are located at RO positions corresponding to the same synchronization signal block in an association period, and the preamble with repetitions has a same preamble index.

Optionally, in a case that one synchronization signal block corresponds to at least two ROs, the plurality of ROs are located at RO positions corresponding to the same synchronization signal block in an association period.

Non-claimed embodiments of this application further provide a network-side device, including a processor and a communication interface. The communication interface is configured to: receive a preamble with repetitions on a plurality of physical random access channel occasions (RO), where the preamble is used for random access of a terminal. The processor is configured to determine a random access response (RAR) window. The communication interface is further configured to send RAR information in the RAR window. The RAR window starts from a first symbol of an earliest control resource set associated with a first physical downlink control channel (PDCCH), and the first PDCCH is a PDCCH in a type 1-physical downlink control channel common resource set. The RAR window satisfies at least one of the following: The RAR window is at least one symbol following a last symbol of a first RO occupied by the preamble with repetitions. The RAR window is at least one symbol following a last symbol of a last RO occupied by the preamble with repetitions. The RAR window is at least one symbol following a last symbol of each RO occupied by the preamble with repetitions. The network-side device embodiment corresponds to the foregoing network-side device method embodiments. Each implementation process and implementation of the foregoing method embodiments may be applied to the network-side device embodiment, and can achieve the same technical effect.

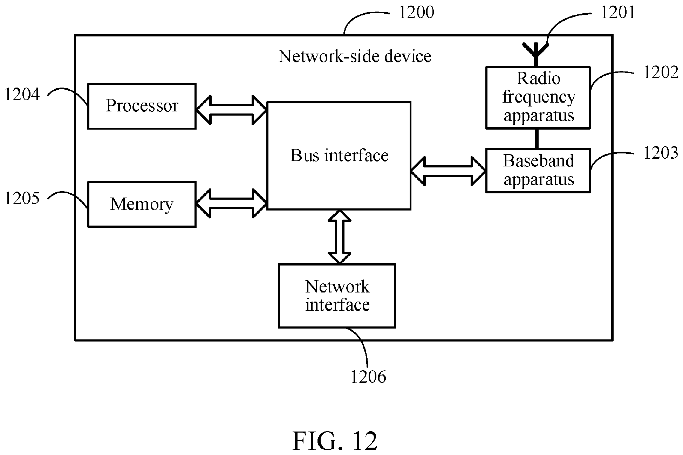

Specifically, embodiments of this application further provide a network-side device. As shown in FIG. 12, a network-side device 1200 includes: an antenna 1201, a radio frequency apparatus 1202, and a baseband apparatus 1203. The antenna 1201 is connected to the radio frequency apparatus 1202. In an uplink direction, the radio frequency apparatus 1202 receives information through the antenna 1201 and sends the received information to the baseband apparatus 1203 for processing. In a downlink direction, the baseband apparatus 1203 processes information to be sent and sends the information to the radio frequency apparatus 1202. The radio frequency apparatus 1202 processes the received information and sends the information through the antenna 1201.

The foregoing band processing apparatus may be located in the baseband apparatus 1203. The method performed by the network-side device in the above embodiments may be implemented in the baseband apparatus 1203. The baseband apparatus 1203 includes a processor 1204 and a memory 1205.

The baseband apparatus 1203 may, for example, include at least one baseband board. The baseband board is provided with a plurality of chips. As shown in FIG. 12, one of the chips is, for example, a processor 1204, connected to the memory 1205 to invoke programs in the memory 1205 to perform a network-side device operation shown in the above method embodiments.

The baseband apparatus 1203 may further include a network interface 1206 for exchanging information with the radio frequency apparatus 1202. The interface is, for example, a common public radio interface (common public radio interface, CPRI).

Specifically, the network-side device in this embodiment of the present invention further includes: instructions or programs stored in the memory 1205 and executable on the processor 1204. The processor 1204 invokes the instructions or programs in the memory 1205 to implement the method performed by each module shown in FIG. 9 to achieve the same technical effect. To avoid repetitions, details are not repeated herein.

Non-claimed embodiments of this application further provide a readable storage medium. The readable storage medium stores programs or instructions. The programs or instructions, when executed by a processor, implement various processes of the embodiments of the random access processing method, and can achieve the same technical effect. To avoid repetitions, details are not repeated herein.

The processor is a processor in the electronic device described in the foregoing embodiments. The readable storage medium includes a computer-readable storage medium, such as a computer read-only memory (Read-Only Memory, ROM), a random access memory (Random Access Memory, RAM), a magnetic disk, an optical disc, or the like.

Non-claimed embodiments of this application additionally provide a chip. The chip includes a processor and a communication interface. The communication interface is coupled to the processor. The processor is configured to execute programs or instructions, which implement various processes of the embodiments of the random access processing method and can achieve the same technical effect. To avoid repetitions, details are not repeated herein.

It should be understood that the chip referred to in this embodiment of this application may also be referred to as a system-on-chip, a system chip, a chip system, a system-on-a-chip, or the like.

Non-claimed embodiments of this application additionally provide a computer program product. The computer program product is stored in a non-transient or non-volatile storage medium. The computer program product is executed by at least one processor to implement various processes of the embodiments of the random access processing method, and can achieve the same technical effect. To avoid repetitions, details are not repeated herein.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Furthermore, it should be noted that the scope of the method and apparatus in the implementations of this application is not limited to performing functions in the order shown or discussed, but may also include performing functions in a substantially simultaneous manner or in reverse order depending on the functions involved. For example, the described methods may be performed in a different order than described, and various steps may be added, omitted, or combined. In addition, features described with reference to some examples may be combined in other examples.

According to the descriptions in the above implementations, those skilled in the art may clearly learn that the method according to the foregoing embodiment may be implemented by relying on software and a necessary common hardware platform, and may be definitely implemented by hardware. However, in many cases, the former is a preferred implementation. Based on such an understanding, the technical solution of this application, either inherently or in any part contributing to the related art, may be embodied in the form of a computer software product. The computer software product is stored in a storage medium (such as a ROM/RAM, a magnetic disk, and an optical disc), and includes a plurality of instructions for enabling a terminal (which may be a mobile phone, a computer, a server, an air conditioner, or a base station) to perform the method according to the various embodiments of this application.

**Claims**

1. A random access processing method, comprising:

   transmitting (201), by a terminal, a preamble with repetitions on a plurality of physical random access channel occasions, RO, wherein the preamble is used for random access; and
   starting (202), by the terminal, a random access response, RAR, window, and monitoring RAR information, wherein the RAR window starts from a first symbol of an earliest control resource set associated with a first physical downlink control channel, PDCCH, and the first PDCCH is a PDCCH in a Type 1-physical downlink control channel, Type1-PDCCH, common resource set; the RAR window satisfies:

      the RAR window is at least one symbol following a last symbol of a last RO occupied by the preamble with repetitions,
      in a case that one synchronization signal block corresponds to one RO, the plurality of ROs are located at RO positions corresponding to the same synchronization signal block in an association period, and
      the preamble transmitted with repetitions has a same preamble index.

2. The method according to claim 1, wherein the method further comprises:
   determining, by the terminal, a random access radio network temporary identifier, RA-RNTI, wherein the RA-RNTI is used for scrambling a monitored PDCCH for scheduling the RAR information.

3. The method according to claim 2, wherein the RA-RNTI satisfies:
   in a case that the RAR window is at least one symbol following a last symbol of a last RO occupied by the preamble with repetitions, the RA-RNTI is determined based on an $M^{th}$ RO occupied by the preamble with repetitions, and M is a positive integer.

4. The method according to claim 3, wherein M is indicated by a protocol agreement or a network-side device.

5. The method according to any one of claims 1 to 4, wherein the plurality of ROs are associated with a same synchronization signal block.

6. The method according to any one of claims 1 to 4, wherein in a case that one synchronization signal block corresponds to at least two ROs, the plurality of ROs are located at RO positions corresponding to the same synchronization signal block in an association period.

7. A random access processing method, comprising:

   receiving (701), by a network-side device, a preamble with repetitions on a plurality of physical random access channel occasions, RO, wherein the preamble is used for random access of a terminal;
   determining (702), by the network-side device, a random access response, RAR, window; and
   sending (703), by the network-side device, RAR information in the RAR window,
   wherein the RAR window starts from a first symbol of an earliest control resource set associated with a first physical downlink control channel, PDCCH, and the first PDCCH is a PDCCH in a Type 1-physical downlink control channel, Type1-PDCCH, common resource set; the RAR window satisfies:

      the RAR window is at least one symbol following a last symbol of a last RO occupied by the preamble with repetitions,
      in a case that one synchronization signal block corresponds to one RO, the plurality of ROs are located at RO positions corresponding to the same synchronization signal block in an association period,
      and the preamble with repetitions has a same preamble index.

8. The method according to claim 7, wherein the method further comprises:

determining, by the network-side device, a random access radio network temporary identifier, RA-RNTI, wherein the RA-RNTI is used for scrambling a PDCCH for scheduling the RAR information.

9. The method according to claim 8, wherein the RA-RNTI satisfies at least one of the following:

in a case that the RAR window is at least one symbol following a last symbol of a first RO occupied by the preamble with repetitions, the RA-RNTI is determined based on the first RO;
in a case that the RAR window is at least one symbol following a last symbol of a last RO occupied by the preamble with repetitions, the RA-RNTI is determined based on an $M^{th}$ RO occupied by the preamble with repetitions, and M is a positive integer; and
in a case that the RAR window is at least one symbol following a last symbol of each RO occupied by the preamble with repetitions, the RA-RNTI is determined based on an RO closest to a time point at which the RAR window is opened.

10. The method according to any one of claims 7 to 9, wherein the plurality of ROs are associated with a same synchronization signal block.

11. The method according to any one of claims 7 to 9, wherein in a case that one synchronization signal block corresponds to at least two ROs, the plurality of ROs are located at RO positions corresponding to the same synchronization signal block in an association period.

12. A terminal (1100), **characterized by** comprising: a memory (1109), a processor (1110), and programs stored in the memory (1109) and executable on the processor (1110), wherein the programs, when executed by the processor (1110), implement the steps of the random access processing method according to any one of claims 1 to 6.

13. A network-side device (1200), **characterized by** comprising: a memory (1205), a processor (1204), and programs or instructions stored in the memory (1205) and executable on the processor (1204), wherein the programs or instructions, when executed by the processor, implement the steps of the random access processing method according to any one of claims 7 to 11.

**Patentansprüche**

1. Zufallzugriffsverarbeitungsverfahren, umfassend:

Übertragen (201), durch ein Endgerät, einer Präambel mit Wiederholungen bei einer Vielzahl von physischen Zufallszugriffskanal-Gelegenheiten (random access channel occassions, RO), wobei die Präambel für Direktzugriff verwendet wird; und
Starten (202), durch das Endgerät, eines Direktzugriffsantwort- (random access response, RAR-), Fensters und Überwachen von RAR-Informationen,
wobei das RAR-Fenster von einem ersten Symbol eines frühesten Steuerressourcensatzes, der mit einem ersten physischen Downlink-Steuerkanal, PDCCH, assoziiert ist, startet, und der erste PDCCH ein PDCCH in einem gemeinsamen Ressourcensatz eines physischen Downlink-Steuerkanals vom Typ 1, Typel-PDCCH, ist; das RAR-Fenster erfüllt:

das RAR-Fenster ist mindestens ein Symbol folgend auf ein letztes Symbol einer letzten RO, die durch die Präambel mit Wiederholungen belegt ist,
in einem Fall, dass ein Synchronisationssignalblock einer RO entspricht, sind die Vielzahl von ROs an RO-Positionen angeordnet, die dem gleichen Synchronisationssignalblock in einer Assoziierungsperiode entsprechen,
und die mit Wiederholungen übertragene Präambel hat einen gleichen Präambelindex.

2. Verfahren nach Anspruch 1, wobei das Verfahren ferner umfasst:
Bestimmen, durch das Endgerät, einer temporären Funknetzkennzeichnung für Direktzugriff (random access radio network temporary identifier, RA-RNTI), wobei die RA-RNTI für Scrambling eines überwachten PDCCH zur Planung der RAR-Informationen verwendet wird.

3. Verfahren nach Anspruch 2, wobei die RA-RNTI erfüllt:

in einem Fall, dass das RAR-Fenster mindestens ein Symbol folgend auf ein letztes Symbol einer letzten RO, die durch die Präambel mit Wiederholungen belegt ist, ist, wird die RA-RNTI basierend auf einer M-ten RO, die durch die Präambel mit Wiederholungen belegt ist, bestimmt, und M ist eine positive ganze Zahl.

4. Verfahren nach Anspruch 3, wobei M durch eine Protokollvereinbarung oder eine netzwerkseitige Vorrichtung angezeigt wird.

5. Verfahren nach einem der Ansprüche 1 bis 4, wobei die Vielzahl von ROs mit einem gleichen Synchronisationssignalblock assoziiert sind.

6. Verfahren nach einem der Ansprüche 1 bis 4, wobei in einem Fall, dass ein Synchronisationssignalblock mindestens zwei ROs entspricht, die Vielzahl von ROs an RO-Positionen angeordnet sind, die dem gleichen Synchronisationssignalblock in einer Assoziierungsperiode entsprechen.

7. Zufallzugriffsverarbeitungsverfahren, umfassend:

Empfangen (701), durch eine netzwerkseitige Vorrichtung, einer Präambel mit Wiederholungen bei einer Vielzahl von physischen Zufallszugriffskanal-Gelegenheiten (random access channel occassions, RO), wobei die Präambel für Direktzugriff eines Endgeräts verwendet wird;
Bestimmen (702), durch die netzwerkseitige Vorrichtung, eines Direktzugriffsantwort- (random access response, RAR-), Fensters; und
Senden (703), durch die netzwerkseitige Vorrichtung, von RAR-Informationen in dem RAR-Fenster,
wobei das RAR-Fenster von einem ersten Symbol eines frühesten Steuerressourcensatzes, der mit einem ersten physischen Downlink-Steuerkanal, PDCCH, assoziiert ist, startet, und der erste PDCCH ein PDCCH in einem gemeinsamen Ressourcensatz eines physischen Downlink-Steuerkanals vom Typ 1, Typel-PDCCH, ist;
das RAR-Fenster erfüllt:

das RAR-Fenster ist mindestens ein Symbol folgend auf ein letztes Symbol einer letzten RO, die durch die Präambel mit Wiederholungen belegt ist,
in einem Fall, dass ein Synchronisationssignalblock einer RO entspricht, sind die Vielzahl von ROs an RO-Positionen angeordnet, die dem gleichen Synchronisationssignalblock in einer Assoziierungsperiode entsprechen,
und die Präambel mit Wiederholungen hat einen gleichen Präambelindex.

8. Verfahren nach Anspruch 7, wobei das Verfahren ferner umfasst:
Bestimmen, durch die netzwerkseitige Vorrichtung, einer temporären Funknetzkennzeichnung für Direktzugriff (random access radio network temporary identifier, RA-RNTI), wobei die RA-RNTI für Scrambling eines PDCCH zur Planung der RAR-Informationen verwendet wird.

9. Verfahren nach Anspruch 8, wobei die RA-RNTI mindestens eines des Folgenden erfüllt:

in einem Fall, dass das RAR-Fenster mindestens ein Symbol folgend auf ein letztes Symbol einer ersten RO, die durch die Präambel mit Wiederholungen belegt ist, ist, wird die RA-RNTI basierend auf der ersten RO bestimmt;
in einem Fall, dass das RAR-Fenster mindestens ein Symbol folgend auf ein letztes Symbol einer letzten RO, die durch die Präambel mit Wiederholungen belegt ist, ist, wird die RA-RNTI basierend auf einer M-ten RO, die durch die Präambel mit Wiederholungen belegt ist, bestimmt, und M ist eine positive ganze Zahl; und
in einem Fall, dass das RAR-Fenster mindestens ein Symbol folgend auf ein letztes Symbol jeder RO, die durch die Präambel mit Wiederholungen belegt ist, ist, wird die RA-RNTI basierend auf einer RO, die einem Zeitpunkt, zu dem das RAR-Fenster geöffnet wird, am nächsten ist, bestimmt.

10. Verfahren nach einem der Ansprüche 7 bis 9, wobei die Vielzahl von ROs mit einem gleichen Synchronisationssignalblock assoziiert sind.

11. Verfahren nach einem der Ansprüche 7 bis 9, wobei in einem Fall, dass ein Synchronisationssignalblock mindestens zwei ROs entspricht, die Vielzahl von ROs an RO-Positionen angeordnet sind, die dem gleichen Synchronisationssignalblock in einer Assoziierungsperiode entsprechen.

12. Endgerät (1100), **gekennzeichnet durch** umfassend: einen Speicher (1109), einen Prozessor (1110) und Programme, die in dem Speicher (1109) gespeichert und auf dem Prozessor (1110) ausführbar sind, wobei die Programme, wenn sie durch den Prozessor (1110) ausgeführt werden, die Schritte des Zufallzugriffsverarbeitungsverfahrens nach einem der Ansprüche 1 bis 6 implementieren.

13. Netzwerkseitige Vorrichtung (1200), **gekennzeichnet durch** umfassend: einen Speicher (1205), einen Prozessor (1204) und Programme oder Anweisungen, die in dem Speicher (1205) gespeichert und auf dem Prozessor (1204) ausführbar sind, wobei die Programme oder Anweisungen, wenn sie durch den Prozessor ausgeführt werden, die Schritte des Zufallzugriffsverarbeitungsverfahrens nach einem der Ansprüche 7 bis 11 implementieren.

**Revendications**

1. Procédé de traitement d'accès aléatoire, comprenant :

   transmettre (201), par un terminal, un préambule avec des répétitions sur une pluralité d'occasions de canal d'accès aléatoire physique (random access channel occassions, RO), dans lequel le préambule est utilisé pour l'accès aléatoire ; et
   démarrer (202), par le terminal, une fenêtre de réponse d'accès aléatoire (random access response, RAR), et surveiller des informations RAR,
   dans lequel la fenêtre RAR démarre à partir d'un premier symbole d'un ensemble de ressources de commande le plus précoce qui est associé à un premier canal de commande de liaison descendante physique, PDCCH, et le premier PDCCH est un PDCCH dans un ensemble de ressources commun de canal de commande de liaison descendante physique de type 1, Type1-PDCCH ; la fenêtre RAR satisfait :

   la fenêtre RAR est au moins un symbole suivant un dernier symbole d'un dernier RO qui est occupé par le préambule avec des répétitions,
   dans un cas où un bloc de signal de synchronisation correspond à un RO, la pluralité de RO sont situés à des positions de RO qui correspondent au même bloc de signal de synchronisation dans une période d'association,
   et le préambule qui est transmis avec des répétitions a un même index de préambule.

2. Procédé selon la revendication 1, dans lequel le procédé comprend en outre :
   déterminer, par le terminal, un identifiant temporaire de réseau radio d'accès aléatoire (random access radio network temporary identifier, RA-RNTI), dans lequel le RA-RNTI est utilisé pour l'embrouillage d'un PDCCH qui est surveillé pour ordonnancer les informations RAR.

3. Procédé selon la revendication 2, dans lequel le RA-RNTI satisfait :
   dans un cas où la fenêtre RAR est au moins un symbole suivant un dernier symbole d'un dernier RO qui est occupé par le préambule avec des répétitions, le RA-RNTI est déterminé sur la base d'un $M^{ième}$ RO qui est occupé par le préambule avec des répétitions, et M est un entier positif.

4. Procédé selon la revendication 3, dans lequel M est indiqué par un accord de protocole ou un dispositif côté réseau.

5. Procédé selon l'une quelconque des revendications 1 à 4, dans lequel la pluralité de RO sont associés à un même bloc de signal de synchronisation.

6. Procédé selon l'une quelconque des revendications 1 à 4, dans lequel dans un cas où un bloc de signal de synchronisation correspond à au moins deux RO, la pluralité de RO sont situés à des positions de RO qui correspondent au même bloc de signal de synchronisation dans une période d'association.

7. Procédé de traitement d'accès aléatoire, comprenant :

   recevoir (701), par un dispositif côté réseau, un préambule avec des répétitions sur une pluralité d'occasions de canal d'accès aléatoire physique (random access channel occassions, RO), dans lequel le préambule est utilisé pour l'accès aléatoire d'un terminal ;
   déterminer (702), par le dispositif côté réseau, une fenêtre de réponse d'accès aléatoire (random access response, RAR) ; et
   envoyer (703), par le dispositif côté réseau, des informations RAR dans la fenêtre RAR,

dans lequel la fenêtre RAR démarre à partir d'un premier symbole d'un ensemble de ressources de commande le plus précoce qui est associé à un premier canal de commande de liaison descendante physique, PDCCH, et le premier PDCCH est un PDCCH dans un ensemble de ressources commun de canal de commande de liaison descendante physique de type 1, Type1-PDCCH ; la fenêtre RAR satisfait :

la fenêtre RAR est au moins un symbole suivant un dernier symbole d'un dernier RO qui est occupé par le préambule avec des répétitions,
dans un cas où un bloc de signal de synchronisation correspond à un RO, la pluralité de RO sont situés à des positions de RO qui correspondent au même bloc de signal de synchronisation dans une période d'association,
et le préambule avec des répétitions a un même index de préambule.

8. Procédé selon la revendication 7, dans lequel le procédé comprend en outre :
déterminer, par le dispositif côté réseau, un identifiant temporaire de réseau radio d'accès aléatoire (random access radio network temporary identifier, RA-RNTI), dans lequel le RA-RNTI est utilisé pour l'embrouillage d'un PDCCH pour ordonnancer les informations RAR.

9. Procédé selon la revendication 8, dans lequel le RA-RNTI satisfait au moins l'un des éléments suivants :

dans un cas où la fenêtre RAR est au moins un symbole suivant un dernier symbole d'un premier RO qui est occupé par le préambule avec des répétitions, le RA-RNTI est déterminé sur la base du premier RO ;
dans un cas où la fenêtre RAR est au moins un symbole suivant un dernier symbole d'un dernier RO qui est occupé par le préambule avec des répétitions, le RA-RNTI est déterminé sur la base d'un $M^{ième}$ RO qui est occupé par le préambule avec des répétitions, et M est un entier positif ; et
dans un cas où la fenêtre RAR est au moins un symbole suivant un dernier symbole de chaque RO qui est occupé par le préambule avec des répétitions, le RA-RNTI est déterminé sur la base d'un RO le plus proche d'un instant auquel la fenêtre RAR est ouverte.

10. Procédé selon l'une quelconque des revendications 7 à 9, dans lequel la pluralité de RO sont associés à un même bloc de signal de synchronisation.

11. Procédé selon l'une quelconque des revendications 7 à 9, dans lequel dans un cas où un bloc de signal de synchronisation correspond à au moins deux RO, la pluralité de RO sont situés à des positions de RO qui correspondent au même bloc de signal de synchronisation dans une période d'association.

12. Terminal (1100), **caractérisé en ce qu'**il comprend : une mémoire (1109), un processeur (1110), et des programmes qui sont stockés dans la mémoire (1109) et exécutables sur le processeur (1110), dans lequel les programmes, lorsqu'ils sont exécutés par le processeur (1110), mettent en œuvre les étapes du procédé de traitement d'accès aléatoire selon l'une quelconque des revendications 1 à 6.

13. Dispositif côté réseau (1200), **caractérisé en ce qu'**il comprend : une mémoire (1205), un processeur (1204), et des programmes ou des instructions qui sont stockés dans la mémoire (1205) et exécutables sur le processeur (1204), dans lequel les programmes ou les instructions, lorsqu'ils sont exécutés par le processeur, mettent en œuvre les étapes du procédé de traitement d'accès aléatoire selon l'une quelconque des revendications 7 à 11.

Network-side
device

Terminal

Terminal

FIG. 1

A terminal transmits a preamble with repetitions on a plurality
of physical random access channel occasions (RO) — 201

The terminal starts a random access response (RAR) window,
and monitors RAR information — 202

FIG. 2

| Physical random access channel | | Physical random access channel | | Physical random access channel |

Message 2

Start time — Early termination — End time

Time domain

## FIG. 3

| Physical random access channel | Physical random access channel | Physical random access channel |

Message 2

Start time — End time

Time domain

## FIG. 4

FIG. 5

| Physical random access channel | | Physical random access channel | — Message 2 | Physical random access channel |

Start time    End time    Start time    End time    Start time    End time

Early termination

Time domain

## FIG. 6

A network-side device receives a preamble with repetitions on a plurality of physical random access channel occasions (RO) — 701

The network-side device determines a random access response (RAR) window — 702

The network-side device sends RAR information in the RAR window — 703

## FIG. 7

800

Random access
processing apparatus

First sending
module — 801

First receiving
module — 802

FIG. 8

900

Random access
processing apparatus

Second receiving
module — 901

Second
determination
module — 902

Second sending
module — 903

FIG. 9

1000

Communication device

1001 Processor ⟷ Memory 1002

FIG. 10

1100

Terminal

1101 Radio frequency unit

Network module 1102

1110

1109 Memory
Application
Operating system

Audio output unit 1103

1104
Input unit
Graphics processing unit
Microphone

1108 Interface unit

Processor

1107 User input unit
Touch panel
Another input device

1106
Display unit
Display panel

Sensor 1105

FIG. 11

FIG. 12

**EP 4 418 795 B1**

**REFERENCES CITED IN THE DESCRIPTION**

**Patent documents cited in the description**

- CN 202111205703

- US 2021076384 A1